## Europäisches Patentamt

## European Patent Office

## Office européen des brevets

(19)

(11) Veröffentlichungsnummer: **0 030 617**
**A2**

# (12) EUROPÄISCHE PATENTANMELDUNG

(21) Anmeldenummer: **80106804.0**

(22) Anmeldetag: **05.11.80**

(51) Int. Cl.³: **G 02 B 7/26**

(30) Priorität: **06.12.79 DE 2949097**

(43) Veröffentlichungstag der Anmeldung:
**24.06.81 Patentblatt 81/25**

(84) Benannte Vertragsstaaten:
**AT CH FR GB IT LI**

(71) Anmelder: **Felten & Guilleaume Carlswerk Aktiengesellschaft**
**Schanzenstrasse 24 Postfach 80 50 01**
**D-5000 Köln 80(DE)**

(72) Erfinder: **Rittich, Dieter, Dipl.-Ing.**
**Schubertstrasse 4**
**D-5060 Bergisch Gladbach 1(DE)**

(72) Erfinder: **Schmidt, Bernhard**
**Rehfeld 8**
**D-5206 Neunkirchen(DE)**

(72) Erfinder: **Serapins, Klaus**
**Steinbrecherweg 27**
**D-5060 Bergisch Gladbach 3(DE)**

(54) **Justierbare Verbindung einer zu messenden mit einer aus einem Messgerät kommenden optischen Faser.**

(57) Bei einer justierbaren Verbindung zweier optischer Fasern, insbesondere einer zu messenden Faser (Meßfaser) mit einer aus einem Meßgerät kommenden Faser (Gerätefaser), werden die beiden Faserenden mittels zweier optischer Systeme auf einen Projektionsschirm abgebildet. Die Gerätefaser ist in der Richtung z gehaltert. Ihr gegenüber, in der gleichen Richtung, ist die Meßfaser in einem Mikromanipulator in allen drei senkrecht zueinander stehenden Richtungen x, y und z verschiebbar gehaltert. Bei den beiden optischen Systemen müssen die von den beiden Lichtquellen ausgehenden Strahlen in der xy-Ebene senkrecht zueinander verlaufen.

FIG.1

EP 0 030 617 A2

Justierbare Verbindung einer zu messenden mit einer aus
einem Meßgerät kommenden optischen Faser

---

Die Erfindung betrifft eine justierbare Verbindung zweier
optischer Fasern, insbesondere einer zu messenden Faser
(Meßfaser) mit einer aus einem Meßgerät kommenden Faser
(Gerätefaser), mittels einer optischen Beobachtungseinrichtung für die beiden Faserenden.

Da die Aufgabe besteht, Meßfasern von verschiedenen Herstellern und verschiedenen Abmessungen mit einer Gerätefaser zu
verbinden, scheidet eine Steckverbindung aus. Nimmt man eine
in drei Ebenen und mittels Lupen-Beobachtung justierbare
Verbindung, so erfordert die Justage wegen der geringen Abmessungen - der Durchmesser der Faserstirnflächen liegt in
der Größenordnung von 100 µm - relativ viel Zeit. Außerdem
ist eine Minimierung der Kopplungsverluste nur durch eine
elektrische Signalüberwachung, d.h. den Anschluß eines optischen Empfängers am Ende der Meßfaser, möglich.

Der Erfindung liegt die Aufgabe zugrunde, die Verbindung
einer zu messenden mit einer aus einem Meßgerät kommenden
optischen Faser so zu gestalten, daß die Justage einfach,
genau und in kurzer Zeit erfolgen kann.

Diese Aufgabe wird erfindungsgemäß durch die kennzeichnenden
Merkmale des Anspruchs 1 gelöst. Die aus dem Meßgerät herausgeführte Gerätefaser wird in einer, vorzugsweise starren, Halterung gelagert und ihr gegenüber wird die Meßfaser in einem Mikromanipulator gelagert, der in allen drei senkrecht zueinander stehenden Richtungen verschiebbar ist. Beide Faserenden ragen ein kurzes Stück aus der Halterung und werden mittels zweier optischer Systeme auf einen Projektionsschirm vergrößert abgebildet. Auf dem Schirm erscheinen zwei Bilder der beiden Faserenden, die - wenn man die beiden Faserachsen zur Festlegung der z-Richtung nimmt - eine Justierung in der x- und y-Richtung ermöglichen.

Die mit der Erfindung erzielten Vorteile bestehen in der einfachen, genauen und zeitsparenden Arbeitsweise, die mit einem einfachen konstruktiven Aufwand erreicht wird. Zudem läßt sich bei einer etwa 50-fachen Vergrößerung schon erkennen, ob die Endfläche der Meßfaser genügend plan geschnitten bzw. gebrochen wurde, womit eine vorherige Sichtkontrolle mittels Mikroskop entfallen kann. Weiterhin lassen sich sogar Verschmutzungen auf der Faser erkennen. Auch wird die Gerätefaser nicht mehr wie bei den bisherigen Verbindungen so stark beschädigt, daß sie nach etwa 50 Messungen neu abgesetzt werden müßte. Und schließlich benötigen die Verschiebetische des Mikromanipulators nur einen sehr kleinen Verstellbereich von etwa 10 mm.

Vorteilhafte Weiterbildungen der Erfindung sind in den Unteransprüchen angegeben. So betreffen die Ansprüche 2 bis 4 die Ausbildung der Faserhalterungen und die Ansprüche 5 und 6 die des Projektionsschirms.

Ein Ausführungsbeispiel der Erfindung ist in der Zeichnung dargestellt und wird im folgenden näher beschrieben. Es zeigen

Fig. 1 eine schematische perspektivische Darstellung der justierbaren Verbindung und

Fig. 2 einen Schnitt durch diese justierbare Verbindung längs der Faserachse z mit dem Blick in Richtung Projektionsschirm.

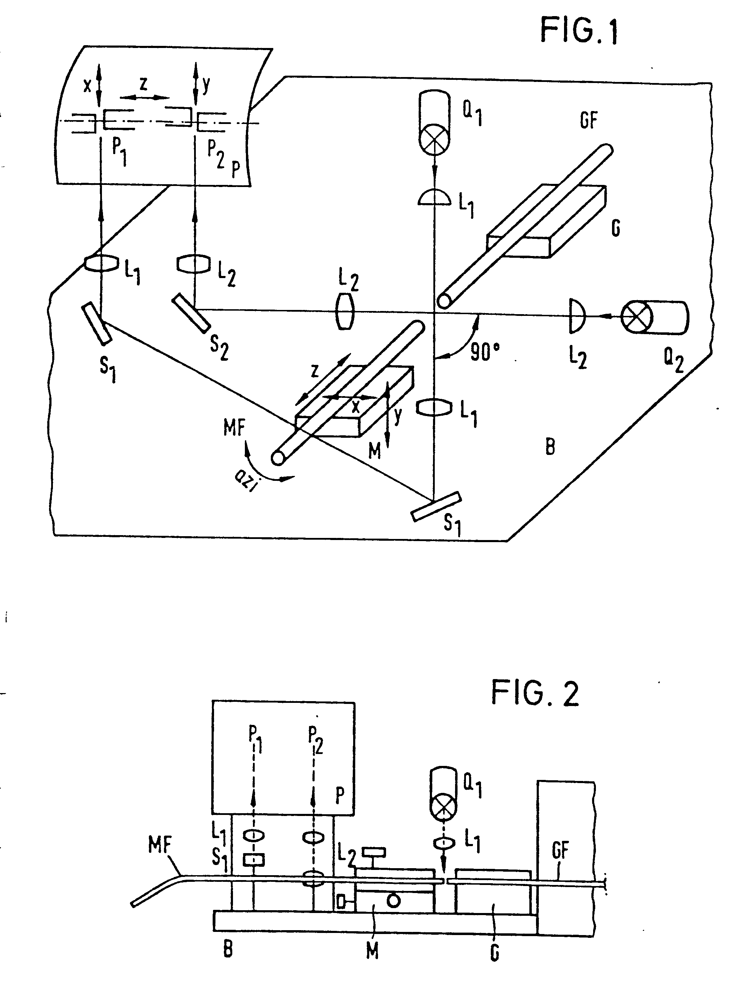

In Fig. 1 ist hauptsächlich die Anordnung der optischen Komponenten zueinander gezeigt. Dagegen sind die Köpfe der beiden Faserhalterungen und die beiden Faserenden zum besseren Erkennen stark vergrößert dargestellt. Die gesamte Einrichtung ist auf einer mit dem Meßgerät verbindbaren Bodenplatte B angeordnet. In der Längsrichtung z der Platte ist eine starre Halterung G für die aus dem Meßgerät herausgeführte Gerätefaser GF angeordnet. Ihr gegenüber, ebenfalls in Längsrichtung, ist eine Halterung M für die Meßfaser MF angeordent, die mittels eines Mikromanipulators in allen drei senkrecht zueinanderstehenden Richtungen x, y und z verschiebbar ist. Im Bild verlaufen die einzelnen Richtungen x nach rechts, y nach oben und z schräg nach hinten. Die beiden optischen Systeme bestehen aus den Lichtquellen $Q_1$ und $Q_2$, den Lisensystemen $L_1$ und $L_2$ und den dazugehörigen Spiegelsystemen $S_1$ und $S_2$. Die beiden Lichtquellen $Q_1$ und $Q_2$ sind oberhalb bzw. auf Höhe, die beiden Spiegel $S_1$ und $S_2$ unterhalb bzw. auf Höhe der Faserhalterungen G und M angeordnet, und die von den Lichtquellen ausgehenden Strahlen verlaufen in der xy-Ebene senkrecht zueinander. (Diese Anordnung der Systemkomponenten ist zur besseren Veranschaulichung so getroffen. Es können auch beide Lichtquellen oberhalb und beide Spiegel unterhalb der Faserhalterungen angeordnet sein. Wesentlich ist nur, daß beide Lichtstrahlen in der xy-Ebene senkrecht zueinander verlaufen.)

Bei der Abbildung erscheinen auf dem Schirm zwei Bilderpaare $P_1$ und $P_2$ der beiden Faserenden, wobei im unjustierten Fall die beiden Enden-Bilder eines Paares gegeneinander verschoben sind. Die Justage in der x- und y-Richtung erfolgt durch Einschieben der Bilder des Paares $P_1$ bzw. $P_2$ auf eine gemeinsame Achse, und schließlich erfolgt die Justage in der z-Richtung durch ein Aneinanderschieben der Bildenden auf der den beiden Paaren gemeinsamen Achse.

Während die Halterung der Gerätefaser G vorzugsweise starr
ist, kann es für aufwendigere Justagen von Vorteil sein,
auch diese Halterung wie die Meßgerätehalterung in den
Richtungen x, y und z verstellbar auszubilden.

Noch universeller kann man die Verbindung einsetzen, wenn
die Meßgerätehalterung zusätzlich in azimutaler Richtung
drehbar ist.  Dies kann mittels eines in der xz-Ebene angeordneten Drehtisches erreicht werden. Damit läßt sich
eine modenselektive Einkopplung erzielen, was besonders
wichtig beim Dämpfungs- oder Dispersionsmeßgerät ist. Damit
wird es möglich, in kürzester Zeit die Dämpfung bzw. Dispersion für hohe oder niedrige Wellenmoden zu bestimmen.

Der Sichtschirm besitzt praktischerweise ein Rastermaß von
beispielsweise 20 µm-Abstandlinien. Hierdurch ist eine
exakte und möglichst verlustarme Justierung von Fasern verschiedener Kerndurchmesser möglich. Den Gerätefaserdurchmesser wählt man wie den größten Meßfaserdurchmesser. Beispielsweise kann man bei einem Gerätefaserdurchmesser von
200 µm Meßfasern zwischen 200 und 50 µm justieren. Dabei
wird eine nahezu 100 %ige Anregung der Meßfaserapertur und
damit auch sämtlicher Moden erreicht.

Schließlich kann man beim Projektionsschirm P statt eines
Sichtschirms vorteilhafterweise eine von hinten beleuchtete
Mattscheibe verwenden.

In Fig. 2 ist die Anordnung der einzelnen Vorrichtungsteile
auf der Bodenplatte B gezeigt. Sie ist rechts mit einem
Meßgerät verbunden. Der Strahlengang der beiden Lichtquellen
- $Q_1$ ist zu sehen, $Q_2$ befindet sich vor der Bildebene - über
die Linsen L und Spiegel S bis zum Projektionsschirm P ist
gestrichelt gezeichnet.

Ansprüche:

1. Justierbare Verbindung zweier optischer Fasern, insbesondere einer zu messenden Faser (Meßfaser) mit einer
aus einem Meßgerät kommenden Faser (Gerätefaser), mittels einer optischen Beobachtungseinrichtung für die
beiden Faserenden, d a d u r c h   g e k e n n -
z e i c h n e t ,  daß auf einer mit dem Meßgerät verbindbaren Bodenplatte (B) folgende Einrichtungen angeordnet sind:

   a) In der Längsrichtung (z) der Platte ist eine Halterung (G) für die Gerätefaser (GF) angeordnet.

   b) Ihr gegenüber, ebenfalls in der Längsrichtung, ist
   eine Halterung (M) für die Meßfaser (MF) angeordnet,
   die  mittels eines Mikromanipulators in allen drei
   senkrecht zueinander stehenden Richtungen (x, y, z)
   verschiebbar ist.

   c) Beide Halterungen haben voneinander einen kurzen Abstand von etwa 10 mm, so daß von jeder Faser ein
   kurzes Stück frei aus der Halterung herausragt.

   d) Die beiden Faserenden werden mittels zweier optischer Systeme, die aus zwei Lichtquellen ($Q_1$, $Q_2$)
   sowie zwei Linsensystemen ($L_1$, $L_2$) und den dazugehörigen Spiegelsystemen ($S_1$, $S_2$) bestehen, auf einen
   Projektionsschirm (P) abgebildet, wobei die Systemkomponenten so angeordnet sind, daß die von den beiden Lichtquellen ausgehenden Strahlen in der xy-Ebene
   senkrecht zueinander verlaufen.

2. Faserverbindung nach Anspruch 1, d a d u r c h
   g e k e n n z e i c h n e t, daß die Halterung der
   Gerätefaser (G) starr angeordnet ist.

3. Faserverbindung nach Anspruch 1, d a d u r c h
   g e k e n n z e i c h n e t, daß die Halterung der
   Gerätefaser (G) als in den Richtungen x, y und z verstellbarer Mikromanipulator ausgebildet ist.

4. Faserverbindung nach Anspruch 2 oder 3, d a d u r c h
   g e k e n n z e i c h n e t, daß die Halterung der
   Meßfaser (M) zusätzlich als Drehtisch zur Verstellung
   in azimutaler Richtung (in der xz-Ebene) ausgebildet
   ist.

5. Faserverbindung nach einem der Ansprüche 2 bis 4,
   d a d u r c h  g e k e n n z e i c h n e t, daß der
   Projektionsschirm (P) ein Rastermaß besitzt, vorzugsweise mit 20 µm-Abstandslinien.

6. Faserverbindung nach einem der Ansprüche 2 bis 5,
   d a d u r c h  g e k e n n z e i c h n e t, daß der
   Projektionsschirm (P) als von hinten beleuchtete Mattscheibe ausgebildet ist.

## FIG. 1

## FIG. 2